# EUROPÄISCHE PATENTSCHRIFT

(11) **EP 1 859 300 B1**
(45) Veröffentlichungstag und Bekanntmachung des Hinweises auf die Patenterteilung: **06.06.2012**
(21) Anmeldenummer: 06723558.0
(22) Anmeldetag: 20.03.2006
(51) Int. Cl.: G01T 3/00

(54) **VERFAHREN UND SYSTEM ZUR BESTIMMUNG DER FLUENZ HOCHENERGETISCHER NEUTRONEN**
METHOD AND SYSTEM FOR DETERMINING THE FLOW OF HIGH-ENERGY NEUTRONS
PROCEDE ET SYSTEME POUR DETERMINER LA FLUENCE DE NEUTRONS DE GRANDE ENERGIE

(30) Priorität: 18.03.2005 DE 102005012630
(43) Veröffentlichungstag der Anmeldung: 28.11.2007
(73) Patentinhaber: Deutsches Elektronen-Synchrotron DESY, 22603 Hamburg (DE)
(72) Erfinder: LEUSCHNER, Albrecht, 25469 Halstenbek (DE)
(74) Vertreter: UEXKÜLL & STOLBERG
(86) Internationale Anmeldenummer: PCT/EP2006/002540
(87) Internationale Veröffentlichungsnummer: WO 2006/097338

(56) Entgegenhaltungen:
- DE-C1- 4 344 955
- US-B1- 6 393 085
- BIRATTARI C ET A: "An extended range neutron rem counter" Nuclear Instruments & Methods in Physics Research, Section A (Accelerators, Spectrometers, Detectors and Associated Equipment) Netherlands, Bd. A297, Nr. 1-2, 1990, Seiten 250-257, XP009066273 ISSN: 0168-9002 in der Anmeldung erwähnt
- PATENT ABSTRACTS OF JAPAN Bd. 1998, Nr. 04, 31. März 1998 (1998-03-31) & JP 09 318760 A (ALOKA CO LTD), 12. Dezember 1997 (1997-12-12)

## Beschreibung

Die vorliegende Erfindung betrifft ein Verfahren zum Messen der Anzahl hochenergetischer Neutronen, die in einem Detektionsvolumen auftreffen, sowie ein System zur Durchführung des Verfahrens.

Insbesondere im Bereich des Strahlenschutzes ist es erforderlich, die an einem Ort auftretende Neutronen-Fluenz bzw. - Teilchenflussdichte messen zu können, um daraus letztlich die an diesem Ort auftretende Energiedosis zu bestimmen. Dies ist für Neutronen besonders deswegen von Belang, weil sie hinsichtlich der Äquivalentdosis einen hohen Qualitätsfaktor haben, was seine Ursache darin hat, dass sie einen in Bezug auf die deponierte Energie vergleichsweise hohen Schaden in biologischem Gewebe anrichten.

Die Neutronen können nach ihrer Energie unterschieden werden, wobei man von "niederenergetischen" Neutronen spricht, wenn die Energie unterhalb von 10 MeV liegt, und von "hochenergetischen" Neutronen, wenn die Energie oberhalb von 10 MeV liegt. Bei den niederenergetischen Neutronen wird wiederum zwischen "thermischen" Neutronen, die Energien unterhalb von 1 eV haben, und "schnellen" Neutronen mit Energien darüber unterschieden.

Während niederenergetische Neutronen beim Betrieb von Kernreaktoren erzeugt werden, treten hochenergetische Neutronen im Wesentlichen nur beim Betrieb von Beschleunigeranlagen wie Ring- und Linearbeschleunigern auf, wenn der Strahl bei einem sogenannten "Verlustereignis" auf im Strahlrohr befindliche Teile trifft. Für die Erzeugung von hochenergetischen Neutronen sind Strahlenergien erforderlich, die bei Protonen oberhalb von 100 MeV und im Fall von Elektronen bei 1 GeV liegen. Thermische Neutronen können durch Kernreaktionen wie ³He(n,p)³H und ¹⁰B(n,α)⁷Li nachgewiesen werden, wobei jeweils das geladene Reaktionsprodukt, also das Proton oder das α-Teilchen, in einem Proportionalzählrohr nachgewiesen wird. Aufgrund der hohen Wirkungsquerschnitte, den die genannten Kernreaktionen haben, ist so eine gute Nachweismöglichkeit für thermische Neutronen gegeben.

Im Unterschied dazu können jedoch schnelle und hochenergetische Neutronen nicht direkt über Kernreaktionen nachgewiesen werden, da dafür die Wirkungsquerschnitte der Reaktionen zu gering sind. In diesem Fall ist es einerseits möglich, die schnellen Neutronen zunächst durch elastische Stöße mit einem Moderatormaterial zu "thermalisieren", so dass sie nur noch thermische Energien aufweisen, und anschließend mittels der genannten Kernreaktionen zu detektieren. Andererseits können die schnellen Neutronen auch in der Weise "direkt" nachgewiesen werden, dass sie in einem Proportionalzählrohr mit den Kernen des Zählgases elastische Stöße ausführen, in deren Folge Protonen aus den Kernen geschlagen werden, die als geladene Teilchen in dem Zählrohr nachgewiesen werden können.

Aus der DE 43 44 955 C1 ist dazu eine Vorrichtung zum Nachweis von Neutronen bekannt, die eine Hohlkugel aus einem Moderator-material wie Polyethylen (PE) umfasst und ein im Inneren der Hohlkugel angeordnetes Zählrohr. Das Zählrohr enthält neben ³He als Reaktionspartner für die obige Kernreaktion noch CH₄ zum "direkten" Nachweis von schnellen Neutronen. Nachteilig an einer derartigen Vorrichtung ist jedoch, dass auch diese nicht in der Lage ist, hochenergetische Neutronen mit Energien oberhalb von 10 MeV mit einer hinreichend hohen Nachweiswahrscheinlichkeit zu detektieren.

Um das Problem der geringen Nachweiswahrscheinlichkeit zu lösen, ist von C. Birattari et. al. in Nuclear Instruments and Methods A, 1990, S. 250 ein Detektor vorgeschlagen worden, der innerhalb des Moderatorvolumens eine Blei-Zwischenschicht aufweist, die einen inneren Bereich des Detektors umgibt, in dem ein mit BF₃ gefülltes Zählrohr angeordnet ist. Mit dem im Inneren des Moderators angeordneten Blei können hochenergetische Neutronen sogenannte inelastische Streuprozesse ausführen, in deren Folge niederenergetischer Neutronen erzeugt werden, die dann wiederum in dem BF₃-Zählrohr nachgewiesen werden können.

Nachteilig an einem derartigen Detektor ist jedoch, dass im Falle hoher Flussdichten von hochenergetischen Neutronen in der Bleischicht eine so große Zahl niederenergetischer Neutronen erzeugt wird, dass das an dem Zählrohr ausgelesene Signal aufgrund von sogenannten Totzeiteffekten nicht mehr proportional zur Flussdichte der hochenergetischen Neutronen ist. "Totzeiteffekte" treten bei einem Detektor immer dann auf, wenn die Flussdichte der eintreffenden Teilchen so hoch ist, dass während der Zeit, in der das durch ein erstes Teilchen ausgelöste Ereignis noch von dem Detektor und seiner Elektronik verarbeitet wird, ein weiteres Teilchen in dem Detektor auftrifft. Dieses zweite Teilchen wird dann nicht mehr nachgewiesen. Somit wird dann, wenn Totzeiteffekte auftreten, die tatsächliche Flussdichte von dem Detektor "unterschätzt".

Das Problem von Totzeiteffekten tritt insbesondere bei Pulsen hochenergetischer Neutronen auf, wie sie in dem Fall zustande kommen, wo ein gepulster Strahl eines Teilchenbeschleunigers im Bereich der Strahlführung Pulse hochenergetischer Neutronen produziert. Bisher ist man nicht in der Lage, die durch diese Pulse hochenergetischer Neutronen an einem Ort verursachte Äquivalentdosis korrekt zu bestimmen.

In einem Detektor ist jeder Neutronenpuls, der in einer Entfernung von dem Detektor durch ein Verlustereignis erzeugt worden ist, mit sogenannten "prompten" und "verzögerten" Ereignissen verbunden. Prompte Ereignisse werden durch Neutronen verursacht, die auf dem Weg zum Detektor nicht abgebremst wurden und damit im Wesentlichen zum Zeitpunkt des Verlustereignisses im Detektor auftreffen. Die verzögerten Ereignisse kommen durch in der Folge des Verlustereignisses entstandenen thermische oder auf dem Weg zum Detektor thermalisierte Neutronen zustande und treten im Detektor in einem zeitlichen Abstand von 2 bis 3 ms relativ zu dem Verlustereignis auf. In dem Fall, dass durch das Verlustereignis ein Puls hochenergetischer Neutronen erzeugt wurde, ist die Zahl der prompten Ereignisse jedoch aufgrund von Totzeiteffekten stark verfälscht und damit unbrauchbar für eine quantitative Auswertung.

Ausgehend vom Stand der Technik liegt der vorliegenden Erfindung daher die Aufgabe zugrunde, ein Verfahren und ein System zur Bestimmung der Fluenz von hochenergetischen Neutronen anzugeben.

Diese Aufgabe wird durch ein Verfahren mit den folgenden Schritten gelöst:
- Bereitstellen eines Neutronendetektors, der einen Moderator aus einem Kohlenstoff aufweisenden Material und ein mit Zählgas gefülltes Zählrohr aufweist, wobei das Zählrohr zum Nachweis von Neutronen ausgestaltet ist,
- Durchführen einer Messung, bei der die Anzahl der in dem Zählrohr auftretenden Ereignisse als Funktion der Zeit bestimmt wird, wobei die Zahl nⱼ der in einem Zeitintervall j auftretenden Ereignisse erfasst wird und wobei die Zeitintervalle unmittelbar aufeinander folgen,
- Festlegen eines Zeitintervalls als Startzeitpunkt,
- Festlegen eines Auswertungszeitfensters nach dem Startzeitpunkt,
- Auswerten der in dem Auswertungszeitfenster gemessenen Ereignisse und
- Ausgeben eines Zählerwertes, der von der Anzahl der in dem Detektor zum Startzeitpunkt aufgetroffenen hochenergetischen Neutronen und dem Ergebnis der Auswertung abhängt, wobei entweder
   - die Gesamtzahl der in dem Auswertungszeitfenster (f₁) gemessenen Ereignisse bestimmt wird und ein Zählerwert unterschiedlich von 0 proportional zu der Gesamtzahl der in dem Auswertungszeitfenster (f₁) gemessenen Ereignisse ausgegeben wird, wenn die Gesamtzahl über einer ersten Schwelle liegt, oder
   - das Auswerten durch Anpassen eines Zerfallsgesetzes der Form αⱼ =α₀ · 2^{-*tj*/*T1*/*2*} an die in dem Auswertungszeitfenster (f₁) gemessenen Ereignisse erfolgt und wobei der ausgegebene Zählerwert von a₀ abhängt.

Unter einem "Ereignis" soll im Folgenden das Ausgeben eines Impulses durch den Neutronendetektor verstanden werden, der auf ein eintreffendes Neutron zurückgeht.

Bei der zeitaufgelösten Bestimmung wird mit dem Ereignis auch die Zeit seines Auftretens gespeichert, so dass bei der späteren Auswertung nicht nur die Gesamtzahl der Ereignisse zur Verfügung steht, sondern die Zahl der Ereignisse als Funktion des Messzeitpunktes analysiert werden kann. Messtechnisch wird dabei so vorgegangen, dass jeweils die Zahl nⱼ der in einem Zeitintervall j ("bin") auftretenden Ereignisse erfasst wird. Um dann die jeweilige Zählrate aⱼ zu erhalten, muss nⱼ durch die Länge (tⱼ - tⱼ₋₁) des Zeitintervalls j geteilt werden. Dabei müssen die Zeitintervalle unmittelbar aufeinander folgen, so dass keine Ereignisse "verloren" gehen.

Unter dem Startzeitpunkt wird bei einer derartigen Messung dasjenige Zeitintervall verstanden, in das durch mit dem Neutronenpuls verbundene prompte Ereignisse fallen.

Geht man davon aus, dass ein kurzer Neutronenpuls mit hochenergetischen Neutronen auf den Detektor auftrifft, treten zum Startzeitpunkt prompte Ereignisse auf. Wenn es sich jedoch um einen hinreichend starken Neutronenpuls mit großer Flussdichte handelt, hat dies zur Folge, dass die Anzahl der zum Startzeitpunkt erfassten Ereignisse aufgrund der oben erwähnten Totzeiteffekte die Zahl der tatsächlich im Detektor aufgetroffenen hochenergetischen Neutronen "unterschätzt".

Der Nachweis, dass überhaupt hochenergetische Neutronen im Detektor aufgetroffen sind, sowie eine Bestimmung der Anzahl wird durch die Auswertung der Ereignisse im Auswertungszeitfenster möglich.

Hochenergetische Neutronen erzeugen über die Kernreaktion ¹²C(n, X)⁹Li als Reaktionsprodukt ⁹Li. Das ⁹Li zerfällt mit einer Halbwertszeit von 170 ms über die Reaktion ⁹Li → ⁹Be* + β⁺ + v in einen angeregten Zustand des Berylliums (⁹Be*). Das angeregte ⁹Be* zerfällt wiederum nahezu instantan über die Kette ⁹Be* → ⁴He + ⁴He + ¹n, wobei das produzierte Neutron niederenergetisch ist und im Zählrohr ohne Weiteres nachgewiesen werden kann.

Dies bedeutet, dass beim Auftreffen hochenergetischer Neutronen auf das Moderatormaterial niederenergetische Neutronen erzeugt werden, wobei die Zahl der erzeugten Neutronen einem Zerfallsgesetz der Form *αⱼ* =*a*₀·*2*^{*-t*/*T*1/2} folgt mit einer Halbwertszeit T_{½} von 170 ms relativ zum Auftreffen der prompten Neutronen im Detektor. Damit können im Zählrohr niederenergetische Neutronen mit dem entsprechenden Zerfallsmuster nachgewiesen werden. Die Ereignisse während des Auswertungszeitfensters können also als ein Indikator für das Vorhandensein von hochenergetischen Neutronen im Neutronenpuls dienen und für die Bestimmung der Fluenz herangezogen werden statt der durch Totzeiteffekte beeinflussten Anzahl prompter Ereignisse zum Startzeitpunkt.

In bevorzugter Weise wird der Startzeitpunkt als der Zeitpunkt festgelegt, bei dem die gemessene Anzahl von Ereignissen eine Auslöseschwelle überschreitet. Der Startzeitpunkt kann alternativ auch durch ein äußeres Signal festgelegt werden, das beispielsweise von einer Beschleunigeranlage mit gepulstem Strahl kommt.

Insbesondere eine "Einzelpuls-Auswertung", bei der nur ein einziger Neutronenpuls ausgewertet wird, erfolgt erfindungsgemäß in der Weise, dass geprüft wird, ob die Gesamtzahl der im Auswertungszeitfenster erfassten Ereignisse oberhalb einer ersten Schwelle und damit über einem Rauschpegel liegt, sodass daraus auf das Auftreffen von hochenergetischen Neutronen während des ersten Zeitintervalls geschlossen werden kann. Der ausgegebene Zählerwert ist für den Fall, dass die erste Schwelle überschritten wird, proportional zur Gesamtzahl der in dem Auswertungszeitfenster gemessenen Ereignisse. Dies stellt eine einfache Methode dar, um einen Zählerwert als Maß für die Fluenz hochenergetischer Neutronen auszugeben, die auch bei geringer Gesamtzahl von Ereignissen im Auswertungszeitfenster zuverlässig arbeitet.

Alternativ wird erfindungsgemäß das "Spektrum" verzögerter Ereignisse quantitativ analysiert, indem im Auswertungszeitfenster der Verlauf der Anzahl der Ereignisse als Funktion der Zeit analysiert wird. Dies geschieht durch Anpassung eines Zerfallsgesetzes der Form *αⱼ* =*α*₀·2^{-*tj*/*T*1/2} an die Messdaten. Auf diese Weise kann aus dem so festgelegten *a₀* die Anzahl der zum Startzeitpunkt im Detektor aufgetroffenen hochenergetischen Neutronen bestimmt werden. Dies ist insbesondere deswegen leicht möglich, weil der andere in dem Zerfallsgesetz anzupassende Parameter, nämlich die Halbwertszeit T_{1/2}, bekannt ist. Es ist somit möglich, die Zahl der hochenergetischen Neutronen, die zum Startzeitpunkt aufgetroffen sind, auf der Grundlage der Auswertung der im Auswertungszeitfenster erfassten Ereignisse zu bestimmen, ohne das Totzeiteffekte, die zum Startzeitpunkt möglicherweise auftreten, einen Einfluss haben.

In weiter bevorzugter Weise kann ein zweites Auswertungszeitfenster festgelegt werden, wobei die in dem zweiten Auswertungszeitfenster gemessenen Ereignisse ebenfalls ausgewertet werden. Somit kann insbesondere bei der Einzelpulsauswertung eine höhere Genauigkeit erreicht werden.

In bevorzugter Weise ist die Lage und die Länge der Auswertungszeitfenster durch die Lebensdauer eines in dem Moderator-material durch hochenergetische Neutronen erzeugten Radionuklids festgelegt. Hierbei wird ein Auswertungszeitfenster insbesondere so festgelegt, dass die darin erfassten verzögerten Ereignisse auf Neutronen zurückgehen, die infolge des Zerfalls des Radionuklids ⁹Li über die Reaktion ⁹Li → ⁹Be* + β⁺ + v erzeugt worden sind.

Um die Genauigkeit der Auswertung zu verbessern, kann gemäß einer bevorzugten Ausführungsform des Verfahrens eine Vielzahl von Auswertungsrahmen festgelegt werden, wobei jeder Auswertungsrahmen einen Startzeitpunkt und ein Einzelzeitfenster umfasst. Der zeitliche Abstand zwischen Startzeitpunkt und Einzelzeitfenster ist für alle Auswertungsrahmen gleich und das Auswertungszeitfenster wird durch Aufsummieren der gemessenen Anzahlen in den Einzelzeitfenstern festgelegt. Bei dieser sogenannte "Vielpuls-Auswertung" ist das Auswertungszeitfenster ein Summenspektrum, das eine gegenüber den Einzelzeitfenstern verbesserte statistische Qualität hat, so dass die Anpassung eines Zerfallsgesetzes der Form *aⱼ* =*a₀*·2^{*-tj*/*T*1/2} mit höherer Genauigkeit möglich ist. Die Startzeitpunkte für die Auswertungsrahmen können wieder durch eine Auslöseschwelle oder durch ein äußeres Signal festgelegt werden.

Um insbesondere mehrere verschiedene, in dem Moderatormaterial durch hochenergetische Neutronen erzeugte Radionuklide bei der Auswertung berücksichtigen zu können, ist es vorteilhaft, wenn die Auswertungsrahmen zweite Einzelzeitfenster umfassen, wobei ein zweites Auswertungszeitfenster durch Aufsummieren der zweiten Einzelzeitfenster festgelegt wird.

Weiter bevorzugt können nicht nur die Einzelzeitfenster summiert werden, sondern es können aus jedem Auswertungsrahmen die zwischen einem Anfangszeitpunkt vor dem Startzeitpunkt und einem Endzeitpunkt nach dem Ende des Einzelfensters gemessenen Ereignisse zeitaufgelöst addiert werden. Das sich so ergebende Summenspektrum ermöglicht eine Kontrolle, ob der Verlauf der gemessenen Anzahlen dem erwarteten Verlauf entspricht, so dass eventuelle elektronische Fehler leicht erkennbar sind.

Im Folgenden wird die vorliegende Erfindung anhand einer lediglich bevorzugte Ausführungsbeispiele zeigenden Zeichnung erläutert. In der Zeichnung zeigen
- Fig. 1: ein Ausführungsbeispiel eines erfindungsgemäßen Detektorsystems zur Durchführung des erfindungsgemäßen Verfahrens,
- Fig. 2: eine Darstellung der Daten einer zeitaufgelösten Messung,
- Fig. 3: ein Summenspektrum der Daten einer zeitaufgelösten Messung und
- Fig. 4: ein Summenspektrum in einer Lethargie-Darstellung zur Auswertung.

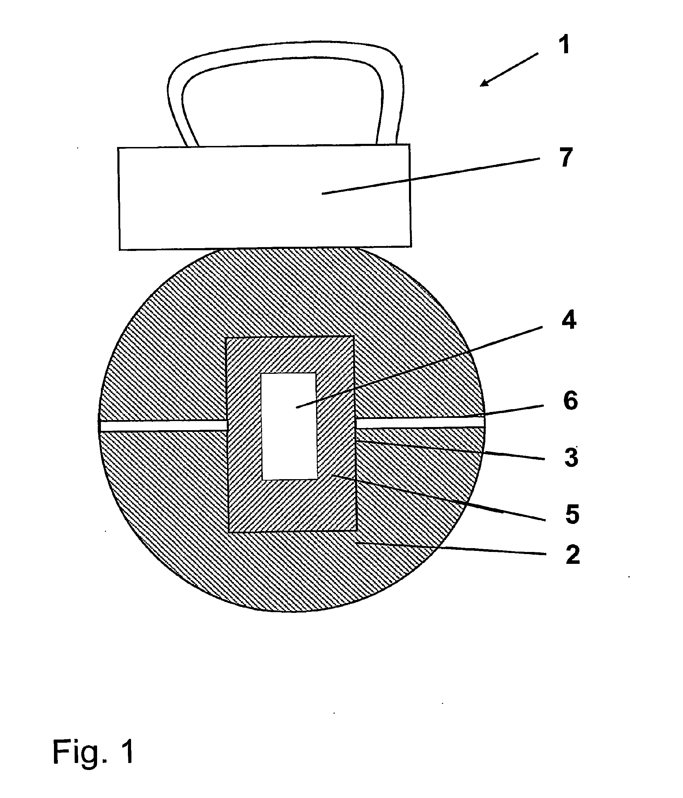

Fig. 1 zeigt ein Detektorsystem 1 zum Messen der Flussdichte hochenergetischer Neutronen, die insbesondere an einem Beschleunigersystem entstehen, wenn ein hochenergetischer Teilchenstrahl bei einem "Verlustereignis" auf Elemente in dem Strahlrohr des Beschleunigersystems trifft.

Das System 1 weist einen Moderator 2 auf, dessen Material Kohlenstoff enthält und der im insoweit bevorzugten Ausführungsbeispiel eine sphärische Form hat. Im Inneren des sphärischen Moderators 2 ist eine Abschirmung 3 vorgesehen, die wiederum ein Proportionalzählrohr 4 umgibt, wobei zwischen der Abschirmung 3 und dem Zählrohr 4 ebenfalls Moderatormaterial 5 vorgesehen ist. In dem Moderator 2 sind außerdem Öffnungen 6, die den Zugang zu dem Zählrohr 4 ermöglichen. Oberhalb des Moderators 2 ist eine Auswertungseinheit 7 vorgesehen, die dazu dient, das elektrische Signal des Proportionalzählrohres 4 gemäß dem erfindungsgemäßen Verfahren zu verarbeiten.

Das Proportionalzählrohr 4 ist in an sich bekannter Weise zum Nachweis von Neutronen ausgestaltet, indem es mit einem Zählgas gefüllt ist, das ³He oder BF₃ enthält. Dadurch können in das Zählrohr eintretende Neutronen eine der beiden Kernreaktionen ³He (n,p)³H und ¹⁰B(n,α)⁷Li mit den Füllung des Zählrohres 4 ausführen, wobei anschließend jeweils das geladene Reaktionsprodukt, Proton oder Alpha-Telichen (p bzw. α), das Gas des Proportionalzählrohres 4 ionisiert, was dann wiederum als Stromstoß bzw. Impuls und damit als Ereignis durch die Auswertungseinheit 7 detektiert werden kann.

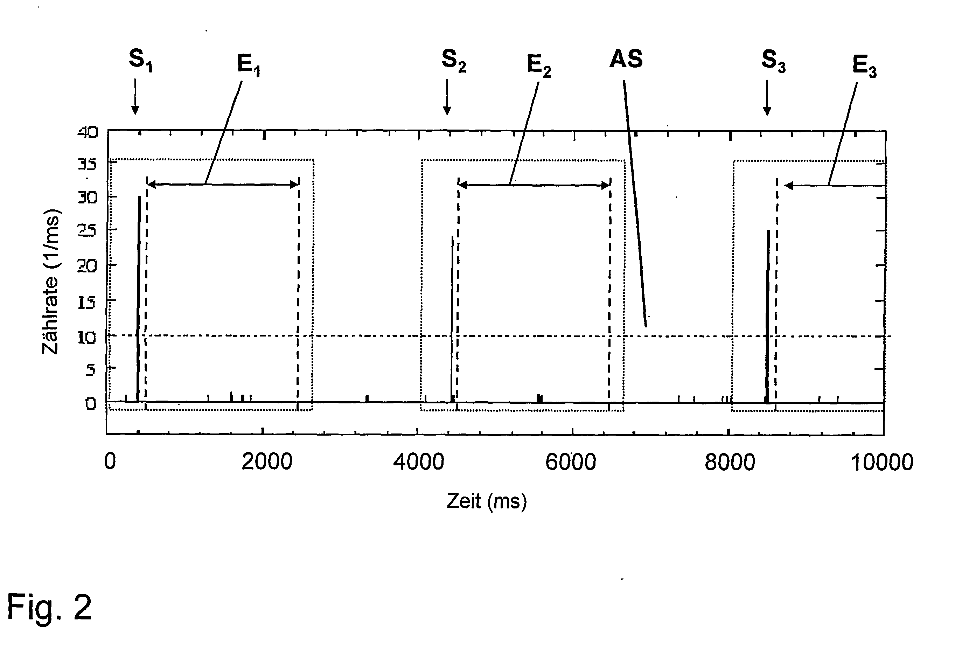

Mit dem Detektorsystem 1 wird das erfindungsgemäße Verfahren wie folgt durchgeführt. Zunächst wird eine Messung durchgeführt, bei der die Anzahl der in dem Zählrohr 4 auftretenden Ereignisse als Funktion der Zeit bestimmt wird, wobei das Ergebnis einer solchen Messung in Fig. 2 dargestellt ist. Bei der Messung wird für aufeinander folgenden Zeitintervalle j jeweils die Anzahl nⱼ der Ereignisse gezählt, die von dem Zählrohr 4 kommen und von der Auswerteeinheit 7 erfasst werden. Um aus der Anzahl nⱼ dieser Ereignisse die Zählrate aⱼ zu bestimmen, ist es noch erforderlich, die Anzahl nⱼ durch die Länge des Zeitintervalls (tⱼ - tⱼ₋₁) zu dividieren.

Im Rahmen einer sogenannten "Vielpuls-Auswertung" werden durch die Auswertungseinheit 7 eine Vielzahl von Auswertungsrahmen aus einem Startzeitpunkt S₁, S₂, S₃ sowie einem Einzelzeitfenster E₁, E₂, E₃ festgelegt. Dabei wird der Startzeitpunkt S₁, S₂, S₃ jeweils in der Weise festgelegt, dass es sich um das Zeitintervall handelt, wo die Zählrate aⱼ oberhalb einer Auslöseschwelle AS liegt. Die Einzelzeitfenster E₁, E₂ und E₃ haben dann jeweils einen fest vorgegebenen zeitlichen Abstand zu dem Startzeitpunkt S₁, S₂, S₃ sowie eine vorgegebene Länge.

Alternativ zu der Festlegung der Startzeitpunkte S₁, S₂, S₃ mittels der Auslöseschwelle AS ist es auch möglich, dass die Startzeitpunkte durch ein äußeres Signal festgelegt werden, was von der Steuerung einer Beschleunigeranlage kommt, in der ein gepulster Teilchenstrahl bereitgestellt wird. Unabhängig von der Art der Festlegung wird jedoch davon ausgegangen, dass zu den Startzeitpunkten S₁, S₂, S₃ ein Verlustereignis stattgefunden hat, in dessen Folge hochenergetische Neutronen erzeugt worden sein könnten.

Die Lage relativ zum Startzeitpunkt und die Länge der Einzelzeitfenster E₁, E₂ und E₃ werden in Abhängigkeit von der Lebensdauer eines in dem Material des Moderators 2 durch hochenergetische Neutronen erzeugten Radionuklids festgelegt. Im insoweit bevorzugten Ausführungsbeispiel handelt es sich um ⁹Li, das dann über die Ketten ⁹Li → ⁹Be* + β⁺ + v und ⁹Be* → ⁴ He + ⁴He + ¹n unter Erzeugung von thermischen Neutronen zerfällt. ⁹Li hat dabei eine Halbwertszeit T_{1/2} von 170 ms.

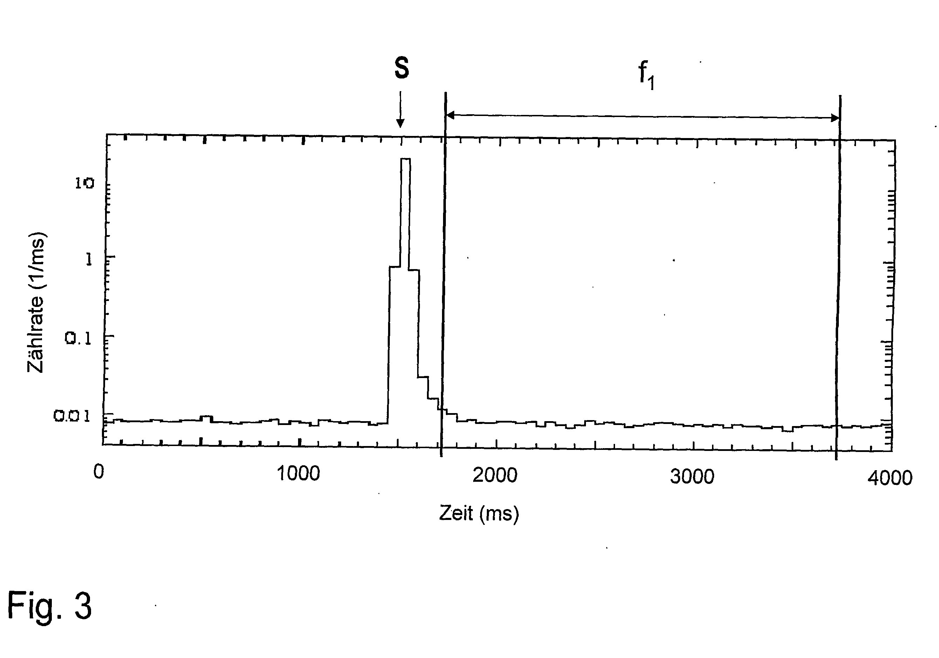

In der Auswertungseinheit 7 wird ein Auswertungszeitfenster f₁ durch zeitaufgelöstes Aufsummieren der gemessenen Anzahlen in den Einzelzeitfenstern E₁, E₂, E₃ festgelegt. Zusätzlich werden in diesem bevorzugten Ausführungsbeispiel neben den Einzelzeitfenstern E₁, E₂, E₃ noch die gemessenen Ereignisse aus jedem Auswertungsrahmen zeitaufgelöst addiert, die in dem Bereich zwischen einem Anfangszeitpunkt vor dem Startzeitpunkt und einem Endzeitpunkt nach dem Ende des Einzelfensters liegen. Diese Bereiche sind in Fig. 2 durch die gestrichelten Rahmen dargestellt. Somit ergibt sich aus allen Messungen ein in Fig. 3 dargestelltes Summenspektrum um eine gemeinsamen "Startzeitpunkt" S. Dieses kann zunächst dahingehend geprüft werden, ob es den erwarteten Verlauf zeigt oder davon abweicht, was entweder auf elektronische Fehler oder sonstige Störungen hinweist.

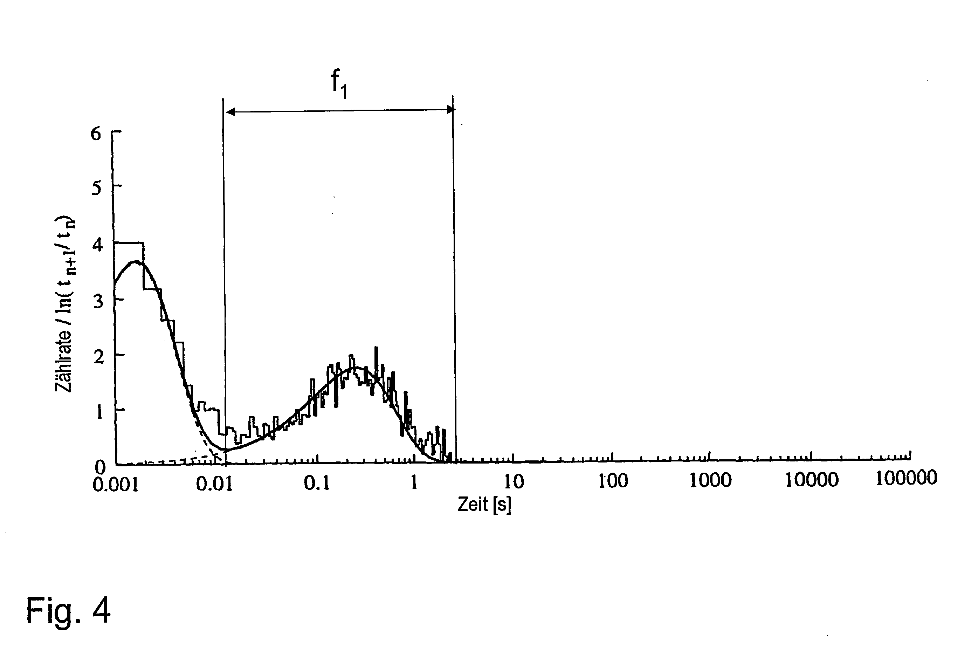

Die Auswertung des Summenspektrums mit dem Auswertungszeitfenster f₁ durch die Auswertungseinheit 7 erfolgt in dem insoweit bevorzugten Ausführungsbeispiel mit Hilfe der sogenannten "Lethargie-Darstellung", wie dies in Fig. 4 dargestellt ist. Dabei wird die Zählrate dividiert durch den Logarithmus von tⱼ/tⱼ₋₁, also dem Verhältnis aus dem Ende und dem Beginn des jeweiligen Zeitintervalls, über der Zeit relativ zum Startzeitpunkt S aufgetragen, wobei die Zeitachse eine logarithmische Skala hat. In dieser Darstellung hat der Verlauf einer Zählrate, die einem Zerfallsgesetz folgt, einen Peak bei der Halbwertszeit geteilt durch ln(2). Die Höhe des Peaks multipliziert mit e entspricht der Gesamtzahl der Ereignisse, die auf den mit dem Zerfallsgesetz verbundenen Prozess zurückgehen. Somit können allein aus der Lage und der Höhe des Peaks die Parameter des Zerfallsgesetzes bestimmt werden. Dabei ist in dieser Darstellung der Startzeitpunkt aufgrund der logarithmischen Skala der Abzisse nicht gezeigt.

Wie in Fig. 4 gezeigt, wird durch das Auswertungszeitfenster f₁ in der Lethargie-Darstellung der Bereich um den Peak erfasst, der durch verzögerte Ereignisse zustande kommt, die auf Neutronen zurückgehen, die beim Zerfall des ⁹Li entstehen. An den Verlauf des Peaks im Summenspektrum wird bei der Auswertung ein Zerfallsgesetz der Form *aⱼ* =*a*₀·2^{*-tj*/*T*1/2} angepasst und daraus das a₀ bestimmt. Der Zählerwert, der von der Auswertungseinheit ausgegeben wird, ist dann wiederum eine Funktion von a₀, wobei bei dieser Vielpuls-Auswertung mit einem Summenspektrum die Statistik deutlich verbessert ist gegenüber einer später beschriebenen Einzelpuls-Auswertung.

"Ausgeben" eines Zählerwertes bedeutet in diesem Zusammenhang, dass die Auswertungseinheit 7 entweder ein Signal mit dem Zählerwert anderen nachgeschalteten Geräten bereitstellt oder dieses Signal für die weitere interne Verarbeitung in der Auswertungseinheit 7 selbst bereitgestellt wird. Der Zählerwert ist dabei ein Maß für die Fluenz hochenergetischer Neutronen, die zu den Startzeitpunkten S₁, S₂, S₃ im Rahmen von Verlustereignissen erzeugt worden sind.

Dieser Auswertung liegt die Überlegung zugrunde, dass die verzögerten Ereignisse, die während des Auswertungszeitfensters f₁ bzw. während der Einzelzeitfenster E₁, E₂, E₃ auftreten, nur durch hochenergetische Neutronen verursacht sein können, die ⁹Li erzeugt haben, das wiederum unter Erzeugung niederenergetischer, verzögerter Neutronen zerfällt, wobei dieser Zerfall einem Zerfallsgesetz mit einer Halbwertszeit von 170 ms folgt. Dieser, aus der Auswertung der Ereignisse im Auswertungszeitfenster f₁ gewonnene Zählerwert kann statt der zu den Startzeitpunkten S₁, S₂, S₃ erfassten prompten Ereignisse als Fluenz-Wert verwendet werden, da aufgrund der Totzeiteffekte die Zahl der prompten Ereignisse die Fluenz hochenergetischer Neutronen unterschätzt und daher unbrauchbar ist.

Es ist auch denkbar, dass neben dem Einzelzeitfenstern E₁, E₂, E₃ in den Auswertungsrahmen jeweils ein zweites Einzelzeitfenster festgelegt wird, durch das verzögerte Ereignisse aufgrund eines zweiten, im Moderator-Material erzeugten Radionuklids erfasst werden können. In diesem Fall würde ein zweites Auswertungszeitfenster durch Aufsummieren der zweiten Einzelzeitfenster festgelegt.

Es ist auch möglich, das Auswertungszeitfenster direkt innerhalb der gemessenen Daten festzulegen und auf eine vorgeschaltete Aufsummierung mehrerer Fenster zu verzichten, sodass die Fluenz hochenergetischer Neutronen aufgrund eines einzelnen Verlustereignisses zum entsprechenden Startzeitpunkt bestimmt werden kann. Beispielsweise kann als Startzeitpunkt der Zeitpunkt S₁ festgelegt werden und als Auswertungszeitfenster direkt das Einzelzeitfenster E₁.

Die Auswertung erfolgt durch die Auswertungseinheit 7 dann in der Weise, dass die Gesamtzahl der in dem Auswertungszeitfenster in dem Zählrohr 4 aufgetretenen verzögerten Ereignisse gebildet wird. Wenn die Gesamtzahl der in dem Auswertungzeitfenster gemessenen Ereignisse über einer ersten Schwelle liegt, wird ein Zählerwert unterschiedlich von 0 ausgegeben. Dabei ist der Zählerwert proportional zu der Gesamtzahl der in dem Auswertungszeitfenster gemessenen Ereignisse. Dieser Zählerwert wird dann statt der Anzahl von Ereignissen zum Startzeitpunkt S₁ als Maß für die Fluenz von Neutronen genommen.

Alternativ zu dieser einfachen Auswertung der Ereignisse in dem Auswertungszeitfenster mittels einer ersten Schwelle, können die Anzahlen der während des Auswertungszeitfenster in dem Zählrohr 4 aufgetretenen verzögerten Ereignisse auch zeitaufgelöst ausgewertet werden. Dazu wird an die Zählrate aⱼ als Funktion des Zeitintervalls j eine Zerfallsfunktion der Form *aⱼ* = *a*₀·*2*^{*-tj*/*T*1/2} angepasst, wobei die Halbwertszeit T_{1/2} bereits durch die Lebensdauer des ⁹Li festgelegt ist. Der durch die Anpassung ermittelte Wert von a₀ ist dann ein Maß für die Fluenz, mit der hochenergetische Neutronen zum Startzeitpunkt im Detektor aufgetreten sind. Der ausgegebene Zählerwert ist dann eine Funktion von dem in der Auswertung ermittelten a₀.

Bei dieser Einzelpuls-Auswertung erfolgt die Auswertung auf der Grundlage der Anzahlen, die einem einzelnen Zeitfenster aufgetreten sind. Insbesondere für die zeitaufgelöste Auswertung mit der Anpassung einer Zerfallsfunktion ist aber die Statistik der Anzahlen in dem Auswertungszeitfenster häufig nicht ausreichend, um ein a₀ mit hinreichend kleinem statistischen Fehler bestimmen zu können.

Die Einzelpuls-Auswertung kann alternativ oder zusätzlich zur Vielpuls-Auswertung erfolgen. Es ist aber auch möglich, auf die Einzelpuls-Auswertung zu verzichten und ausschließlich das Summenspektrum auszuwerten.

Durch das erfindungsgemäße Verfahren sowie das Detektionssystem 1 ist es somit möglich, die Anzahl hochenergetischer Neutronen zuverlässig zu bestimmen, die in dem aus dem Moderator 2 gebildeten Detektionsvolumen auftreffen. Insbesondere kann durch die Auswertung der Anzahlen von Ereignissen, die im zweiten Zeitfenster in dem Zählrohr 4 auftreten, zwischen Ereignissen durch hochenergetische und niederenergetische Neutronen unterschieden werden, so dass eine korrekte Bestimmung der Äquivalentdosis ermöglicht wird.

## Patentansprüche

1. Verfahren zum Messen der Anzahl hochenergetischer Neutronen, die in einem vorbestimmten Detektionsvolumen auftreffen, umfassend die folgenden Schritte:
- Bereitstellen eines Neutronendetektors (1), der einen Moderator (2) aus einem Kohlenstoff aufweisenden Material und ein mit Zählgas gefülltes Zählrohr (4) aufweist, wobei das Zählrohr (4) zum Nachweis von Neutronen ausgestaltet ist,
- Durchführen einer Messung, bei der die Anzahl der in dem Zählrohr (4) auftretenden Ereignisse als Funktion der Zeit bestimmt wird, wobei die Zahl nⱼ der in einem Zeitintervall j auftretenden Ereignisse erfasst wird und wobei die Zeitintervalle unmittelbar aufeinander folgen,
- Festlegen eines Zeitintervalls als Startzeitpunkt (S₁, S₂, S₃),
- Festlegen eines Auswertungszeitfensters (f₁) nach dem Startzeitpunkt,
- Auswerten der in dem Auswertungszeitfensters (f₁) gemessenen Ereignisse und
- Ausgeben eines Zählerwertes, der von der Anzahl der in dem Detektor zum Startzeitpunkt (S₁, S₂, S₃) aufgetroffenen hochenergetischen Neutronen und dem Ergebnis der Auswertung abhängt, wobei entweder
- die Gesamtzahl der in dem Auswertungszeitfenster (f₁) gemessenen Ereignisse bestimmt wird und ein Zählerwert unterschiedlich von 0 proportional zu der Gesamtzahl der in dem Auswertungszeitfenster (f₁) gemessenen Ereignisse ausgegeben wird, wenn die Gesamtzahl über einer ersten Schwelle liegt, oder
- das Auswerten durch Anpassen eines Zerfallsgesetzes der Form *aⱼ* = *a*₀*·*2^{-*tj*/1/2} an die in dem Auswertungszeitfenster (f₁) gemessenen Ereignisse erfolgt und wobei der ausgegebene Zählerwert von a₀ abhängt.

2. Verfahren nach Anspruch 1, wobei der Startzeitpunkt als die Zeit festgelegt wird, bei der die Zahl der Ereignisse eine Auslöseschwelle (AS) überschreitet.

3. Verfahren nach Anspruch 1, wobei das Festlegen des Startzeitpunktes (S₁, S₂, S₃) durch ein äußeres Signal erfolgt.

4. Verfahren nach einem der Ansprüche 1 bis 3, wobei ein zweites Auswertungszeitfenster festgelegt wird und wobei die in dem zweiten Auswertungszeitfenster gemessenen Ereignisse ausgewertet werden.

5. Verfahren nach einem der Ansprüche 1 bis 4, wobei die Auswertungszeitfenster (f₁) in Abhängigkeit von der Lebensdauer eines in dem Moderatormaterial durch hochenergetische Neutronen erzeugten Radionuklids festgelegt werden.

6. Verfahren nach einem der Ansprüche 1 bis 3, wobei eine Vielzahl von Auswertungsrahmen aus einem Startzeitpunkt (S₁, S₂, S₃) und einem Einzelzeitfenster (E₁, E₂, E₃) festgelegt werden, wobei bei den Auswertungsrahmen der zeitliche Abstand zwischen Startzeitpunkt (S₁, S₂, S₃) und Einzelzeitfenster (E₁, E₂, E₃) gleich ist, und wobei das Auswertungszeitfenster (f₁) durch Aufsummieren der gemessenen Anzahlen in den Einzelzeitfenstern (E₁, E₂, E₃) festgelegt wird.

7. Verfahren nach Anspruch 6, wobei ein Summenspektrum erstellt wird, in dem aus jedem Auswertungsrahmen die zwischen einem Anfangszeitpunkt vor dem Startzeitpunkt (S₁, S₂, S₃) und einem Endzeitpunkt nach dem Ende des Einzelfensters (E₁, E₂, E₃) gemessenen Ereignisse zeitaufgelöst addiert werden.

8. Verfahren nach einem der Ansprüche 6 oder 7, wobei die Auswertungsrahmen zweite Einzelzeitfenster umfassen und wobei ein zweites Auswertungszeitfenster durch Aufsummieren der zweiten Einzelzeitfenster festgelegt wird.

9. Verfahren nach Anspruch 6 bis 8, wobei der zeitliche Abstand zwischen den Startzeitpunkten (S₁, S₂, S₃) und den Einzelzeitfenstern (E₁, E₂, E₃) in Abhängigkeit von der Lebensdauer eines in dem Moderatormaterial durch hochenergetische Neutronen erzeugten Radionuklids festgelegt wird.

## Claims

1. Method for measuring the number of high-energy neutrons which impinge in a predetermined detection volume, comprising the following steps:
- providing a neutron detector (1) which comprises a moderator (2) made of a carbon-containing material and a counter tube (4) filled with counter gas, the counter tube (4) being configured to detect neutrons,
- taking measurements, during which the number of events occurring in the counter tube (4) are determined as a function of time, the number nⱼ of events occurring within the time interval j being recorded and the time intervals directly following one another,
- defining a time interval as a start time (S₁, S₂, S₃),
- defining an evaluation time window (f₁) after the start time,
- evaluating the events measured in the evaluation time window (f₁) and
- outputting a counter value which is dependent on the number of high-energy neutrons which have impinged in the detector at the start time (S₁, S₂, S₃) and on the result of the evaluation, wherein either
- the total number of events measured in the evaluation time window (f₁) is determined and a counter value being outputted which is different from 0 and is proportional to the total number of events measured in the evaluation time window (f₁) if the total number is above a first threshold, or
- the evaluation is carried out by adjusting a decay law of the form *aⱼ* = *a*₀ ·2^{-*tj*/*T*1/2} to the events measured in the evaluation time window (f₁), the outputted counter value depending on a₀.

2. Method according to claim 1, wherein the start time is defined as the time at which the number of events exceeds a triggering threshold (AS).

3. Method according to claim 1, wherein the start time (S₁, S₂, S₃) is defined by an external signal.

4. Method according to any one of claims 1 to 3, wherein a second evaluation time window is defined and wherein the events measured in the second evaluation time window are evaluated.

5. Method according to any one of claims 1 to 4, wherein the evaluation time window (f₁) is defined as a function of the lifetime of a radionuclide generated in the moderator material by high-energy neutrons.

6. Method according to any one of claims 1 to 3, wherein a plurality of evaluation frames are defined from a start time (S₁, S₂, S₃) and a single time window (E₁, E₂, E₃), the time period between the start time (S₁, S₂, S₃) and the single time window (E₁, E₂, E₃) being identical in the evaluation frames, and wherein the evaluation time window (f₁) is defined by adding together the measured numbers in the single time windows (E₁, E₂, E₃).

7. Method according to claim 6, wherein a sum spectrum is created in which, from each evaluation frame, the events measured between an initial time before the start time (S₁, S₂, S₃) and an end time after the end of the single time window (E₁, E₂, E₃) are added together in a time-resolved manner.

8. Method according to either claim 6 or claim 7, wherein the evaluation frames comprise second single time windows and wherein a second evaluation time window is defined by adding together the second single time windows.

9. Method according to any one of claims 6 to 8, wherein the time period between the start times (S₁, S₂, S₃) and the single time windows (E₁. E₂, E₃) is defined as a function of the lifetime of a radionuclide generated in the moderator material by high-energy neutrons.

## Revendications

1. Procédé de mesure du nombre de neutrons de haute énergie qui arrivent dans un volume de détection prédéterminé, comprenant les étapes suivantes :
- préparation d'un détecteur de neutrons (1) qui présente un modérateur (2), constitué d'un matériau comportant du carbone, et un tube de comptage (4) rempli avec un gaz de comptage, le tube de comptage (4) étant conçu pour détecter des neutrons,
- réalisation d'une mesure lors de laquelle le nombre des événements se produisant dans le tube de comptage (4) est déterminé en fonction du temps, le nombre nⱼ des événements se produisant dans un intervalle de temps j étant mesuré, et les intervalles de temps se succédant directement,
- définition d'un intervalle de temps en tant qu'instant de démarrage (S₁, S₂, S₃),
- définition d'une fenêtre de temps d'évaluation (f₁) après l'instant de démarrage,
- évaluation des événements mesurés dans la fenêtre de temps d'évaluation (f₁),
et
- émission d'une valeur de compteur qui dépend du nombre des neutrons de haute énergie qui sont arrivés dans le détecteur à l'instant de démarrage (S₁, S₂, S₃), et du résultat de l'évaluation, sachant que soit
- le nombre total des événements mesurés dans la fenêtre de temps d'évaluation (f₁) est déterminé, et une valeur de compteur, différente de 0 et proportionnelle au nombre total des événements mesurés dans la fenêtre de temps d'évaluation (f₁), est émise lorsque le nombre total est supérieur à un premier seuil, ou
- l'évaluation est réalisée par adaptation d'une loi de désintégration, ayant la forme a₁ = *a*₀*·*2^{*-fj*/*T*1/2}, aux événements mesurés dans la fenêtre de temps d'évaluation (f₁), et la valeur de compteur émise dépend de a₀.

2. Procédé selon la revendication 1, selon lequel l'instant de démarrage est défini comme l'instant où le nombre des événements dépasse un seuil de déclenchement (AS).

3. Procédé selon la revendication 1, selon lequel la définition de l'instant de démarrage (S₁, S₂, S₃) est réalisée par un signal externe.

4. Procédé selon une des revendications 1 à 3, selon lequel une deuxième fenêtre de temps d'évaluation est définie et les événements mesurés dans cette deuxième fenêtre de temps d'évaluation sont évalués.

5. Procédé selon une des revendications 1 à 4, selon lequel les fenêtres de temps d'évaluation (f₁) sont définies en fonction de la durée de vie d'un radionucléide généré dans le matériau modérateur par des neutrons de haute énergie.

6. Procédé selon une des revendications 1 à 3, selon lequel une pluralité de cadres d'évaluation sont définis à partir d'un instant de démarrage (S₁, S₂, S₃) et d'une fenêtre de temps individuelle (E₁, E₂, E₃), l'intervalle de temps entre l'instant de démarrage (S₁, S₂, S₃) et la fenêtre de temps individuelle (E₁, E₂, E₃) des cadres d'évaluation étant identique, et la fenêtre de temps d'évaluation (f₁) étant définie par totalisation des nombres mesurés dans les fenêtres de temps individuelles (E₁, E₂, E₃).

7. Procédé selon la revendication 6, selon lequel un spectre somme est établi, dans lequel les événements de chaque cadre d'évaluation, mesurés entre un instant de début, situé avant l'instant de démarrage (S₁, S₂, S₃), et un instant de fin, situé après la fin de la fenêtre individuelle (E₁, E₂, E₃), sont additionnés avec une résolution dans le temps.

8. Procédé selon une des revendications 6 ou 7, selon lequel les cadres d'évaluation comportent des deuxièmes fenêtres de temps individuelles, et une deuxième fenêtre de temps d'évaluation est définie par totalisation des deuxièmes fenêtres de temps individuelles.

9. Procédé selon les revendications 6 à 8, selon lequel l'intervalle de temps entre les instants de démarrage (S₁, S₂, S₃) et les fenêtres de temps individuelles (E₁, E₂, E₃) est défini en fonction de la durée de vie d'un radionucléide généré dans le matériau modérateur par des neutrons de haute énergie.
